# EUROPÄISCHE PATENTANMELDUNG

(11) **EP 3 147 146 A1**
(43) Veröffentlichungstag der Anmeldung: **29.03.2017**
(21) Anmeldenummer: 16184910.4
(22) Anmeldetag: 19.08.2016
(51) Int. Cl.: B60J 7/22

(54) **WINDSCHUTZVORRICHTUNG AN EINEM VERSCHLIESSBAREN DACHAUSSCHNITT EINES KRAFTFAHRZEUGS**

(30) Priorität: 22.09.2015 DE 102015218200
(71) Anmelder: BOS GmbH & Co. KG, 73760 Ostfildern (DE)
(72) Erfinder: Heidan, Michael, 70569 Stuttgart (DE); Wendler, Marc, 73760 Ostfildern (DE)
(74) Vertreter: Patentanwälte Ruff, Wilhelm, Beier, Dauster & Partner mbB

(57) **Zusammenfassung**

Eine derartige Windschutzvorrichtung mit einem Windabweiserbügel, an dem ein flexibles Windschutzgebilde gehalten ist, und der wenigstens einen seitlichen Windabweiserarm aufweist, der mittels einer Führungsmechanik in Hochrichtung und in Längsrichtung des öffnungsfähigen Dachabschnitts zwischen einer unteren Ruheposition und einer nach oben ausgestellten Funktionsposition verlagerbar ist, wobei die Führungsmechanik eine lineare Zwangsführung mit einer gekrümmten Führungsbahn aufweist, längs der der Windabweiserarm in Längs- und Hochrichtung relativ zu dem Dachausschnitt verlagerbar ist, ist bekannt.

Erfindungsgemäß ist dem Windabweiserarm wenigstens eine zusätzliche Stützfläche zugeordnet, die sich auf einer zu der Führungsbahn parallel verlaufenden stationären Gleitfläche abstützt.

Einsatz bei Personenkraftwagen

## Beschreibung

Die Erfindung betrifft eine Windschutzvorrichtung an einem verschließbaren Dachausschnitt eines Kraftfahrzeugs mit einem Windabweiserbügel, an dem ein flexibles Windschutzgebilde gehalten ist, und der wenigstens einen seitlichen Windabweiserarm aufweist, der mittels einer Führungsmechanik in Hochrichtung und in Längsrichtung des öffnungsfähigen Dachabschnitts zwischen einer unteren Ruheposition und einer nach oben ausgestellten Funktionsposition verlagerbar ist, wobei die Führungsmechanik eine lineare Zwangsführung mit einer gekrümmten Führungsbahn aufweist, längs der der Windabweiserarm in Längs- und Hochrichtung relativ zu dem Dachabschnitt verlagerbar ist.

Eine derartige Windschutzvorrichtung ist aus der DE 10 2013 203 979 A1 bekannt. Die bekannte Windschutzvorrichtung ist frontseitig an einem durch einen beweglichen Dachdeckel verschließbaren Dachabschnitt eines Personenkraftwagens angeordnet. Die Windschutzvorrichtung weist einen Windabweiserbügel auf, an dem ein flexibles Windschutzgebilde gehalten ist. Der Windabweiserbügel erstreckt sich in Fahrzeugquerrichtung über die Breite des öffnungsfähigen Dachabschnitts und ist an seinen gegenüberliegenden Seiten mit zwei seitlichen Windabweiserarmen versehen, die einstückig mit dem Windabweiserbügel ausgebildet sind. Jeder Windabweiserarm ist jeweils mittels einer Führungsmechanik relativ zu dem Dachabschnitt sowohl in Längsrichtung des Dachabschnitts als auch in Hochrichtung beweglich gelagert. Die Führungsmechanik weist für jeden Windabweiserarm eine kreisbogenförmige Kulissenführung auf, in der ein kreisbogenförmig gekrümmter Kulissenstein verschiebbar gelagert ist, der einstückig mit dem jeweiligen Windabweiserarm verbunden ist. Zur Überführung des Windabweiserbügels in eine aufgestellte Funktionsposition ist jedem Windabweiserarm eine Schraubenfeder zugeordnet, die auf den Windabweiserbügel Kräfte und Momente ausübt, die eine automatische Überführung des Windabweiserbügels in die Funktionsposition ermöglichen. Der Windabweiserbügel ist lediglich über die beiden Windabweiserarme dachseitig gelagert und abgestützt.

Aufgabe der Erfindung ist es, eine Windschutzvorrichtung der eingangs genannten Art zu schaffen, die eine höhere Stabilität im praktischen Einsatz an einem Dachabschnitt eines Kraftfahrzeugs gewährleistet.

Diese Aufgabe wird dadurch gelöst, dass dem Windabweiserarm wenigstens eine zusätzliche Stützfläche zugeordnet ist, die sich auf einer zu der Führungsbahn parallel verlaufenden stationären Gleitfläche abstützt. Die Stützfläche und die Gleitfläche sind derart komplementär zueinander ausgerichtet, dass Kräfte, die von oben auf den Windabweiserarm wirken, eine zusätzliche Abstützung erfahren. Hierdurch ist gewährleistet, dass der Windabweiserbügel in seiner ausgestellten Funktionsposition gegen von oben auf den Windabweiserbügel wirkende Kräfte verbessert stabilisiert ist. Die erfindungsgemäße Lösung eignet sich in besonders vorteilhafter Weise für den Einsatz an einer Frontseite eines Dachausschnitts eines Fahrzeugdachs eines Personenkraftwagens. Der Dachausschnitt wird durch einen Dachdeckel verschlossen, der zwischen einer Schließstellung und einer Öffnungsstellung längs des Dachausschnitts verfahrbar ist. Der Dachdeckel kann als Schiebedach oder als Schiebe-/Hubdach ausgeführt sein. Der Windabweiserbügel dient dazu, ein flexibles Windschutzgebilde aufzuspannen, das vorzugsweise nach Art eines Netzes gestaltet ist. Dem Windabweiserbügel ist wenigstens eine Federeinheit zugeordnet, die den Windabweiserbügel in Richtung der aufgestellten Funktionsposition kraft- und drehmomentbeaufschlagt. Vorzugsweise ist der Windabweiserbügel durch zwei seitliche Windabweiserarme gestützt, denen jeweils eine eigene Federeinheit zugeordnet ist. Vorteilhaft ist jeder Windabweiserarm mittels einer Führungsmechanik verlagerbar, wobei die Windabweiserarme und die jeweilige Führungsmechanik spiegelsymmetrisch, im Übrigen jedoch identisch zueinander gestaltet sind. Auch die auf den gegenüberliegenden Seiten des Dachausschnitts angeordneten gekrümmten Führungsbahnen sind identisch zueinander und relativ zu einer vertikalen Fahrzeugmittellängsebene spiegelsymmetrisch gestaltet. Auch die Windabweiserarme und die beiden Führungsmechaniken sind relativ zu derselben Ebene spiegelsymmetrisch zueinander ausgeführt.

In Ausgestaltung der Erfindung ist die Führungsbahn als kreisbogenförmig gekrümmte Kulissenführung gestaltet, und die Führungsmechanik weist einen kreisbogenförmig gekrümmten Kulissenstein auf, der starr mit dem Windabweiserarm verbunden und gleitbeweglich in der Kulissenführung gelagert ist. Vorzugsweise ist der Kulissenstein einstückig an dem Windabweiserarm angeformt.

In weiterer Ausgestaltung der Erfindung ist die Kulissenführung in einem Funktionsbauteil einer Führungsanordnung für einen beweglichen Dachdeckel integriert, das in betriebsfertig montiertem Zustand stationär zu dem Dachausschnitt angeordnet ist. Das Funktionsbauteil ist vorzugsweise Teil eines Führungsschienensystems für den beweglichen Dachdeckel.

In weiterer Ausgestaltung der Erfindung ist das Funktionsbauteil stegförmig in Hochrichtung ausgerichtet, und das Funktionsbauteil weist wenigstens eine obere Stirnrandfläche auf, die die Gleitfläche für den Windabweiserarm bildet. Das Funktionsbauteil kann einstückiger Teil eines entsprechenden Führungsschienensystems sein, oder es kann ein separat hergestelltes Bauteil sein, das fest mit dem entsprechenden Führungsschienensystem oder einem Rahmenmodul des verschließbaren Dachausschnitts verbunden ist. Es können pro Funktionsbauteil, d.h. pro Längsseite des Dachausschnitts, eine einzelne oder mehrere Stirnrandflächen vorgesehen sein. Eine Oberseite des Funktionsbauteils dient demzufolge als Abstützfläche, d.h. als Gleitfläche, für den Windabweiserarm.

In weiterer Ausgestaltung der Erfindung ist die Stirnrandfläche koplanar oder parallel versetzt zu einer Ebene ausgerichtet, in der die Kulissenführung verläuft. Damit ist die Stirnrandfläche entweder unmittelbar oberhalb der kreisbogenförmigen Kulissenführung, oder aber in Dachquerrichtung nach innen oder nach außen versetzt zu der Kulissenführung angeordnet.

In vorteilhafter Weise ist das Funktionsbauteil ein- oder mehrteilig ausgeführt. Eine mehrteilige Ausführung liegt vorzugsweise dann vor, wenn wenigstens eine Stirnrandfläche parallel versetzt zu der Ebene der Kulissenführung verläuft. Unter der Ebene der Kulissenführung ist eine ebene Ausrichtung zu verstehen, die in Hochrichtung und in Längsrichtung verläuft, und in der die kreisbogenförmige Kulissenführung erstreckt ist.

In weiterer Ausgestaltung der Erfindung weist das Funktionsbauteil einen Mittelsteg, in dem die Kulissenführung vorgesehen ist, sowie zwei den Mittelsteg flankierende Seitenteile auf, von denen wenigstens ein Seitenteil mit der parallel zur Kulissenführung verlaufenden Gleitfläche für den Windabweiserarm versehen ist. Bei dieser Ausgestaltung bildet das jeweilige Seitenteil auf jeder Seite des Dachausschnitts für den jeweiligen Windabweiserarm die gewünschte Abstützung. Sowohl der Mittelsteg als auch die Seitenteile können mit entsprechenden oberen Stirnrandflächen versehen sein.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung einen Ausschnitt einer Ausführungsform einer erfindungsgemäßen Windschutzvorrichtung,
- Fig. 2: eine Schnittdarstellung der Windschutzvorrichtung nach Fig. 1 entlang einer vertikalen, in Dachlängsrichtung erstreckten Schnittebene und
- Fig. 3: ausschnittsweise eine weitere perspektivische Darstellung der Windschutzvorrichtung nach den Fig. 1 und 2 von einer Dachmitte aus nach außen gesehen.

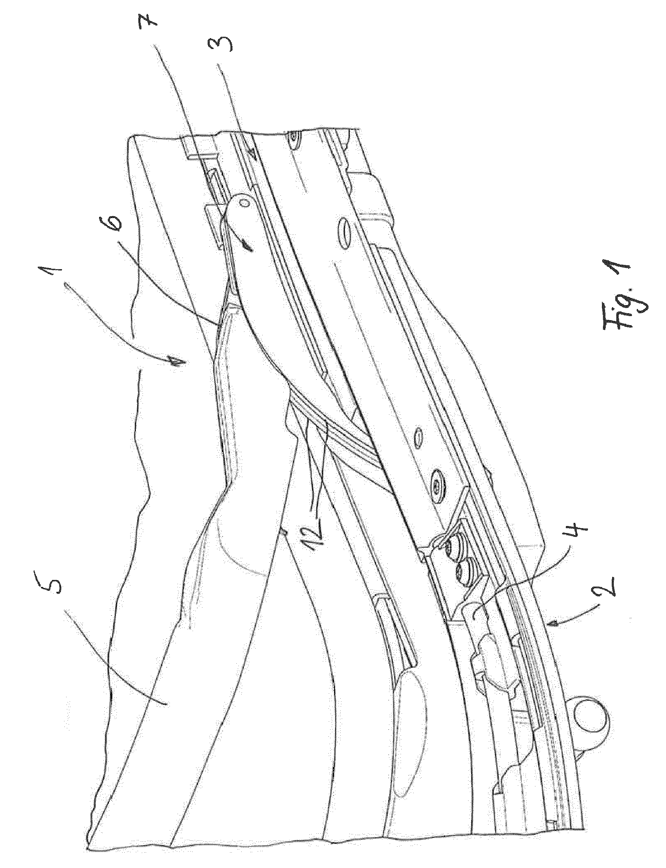

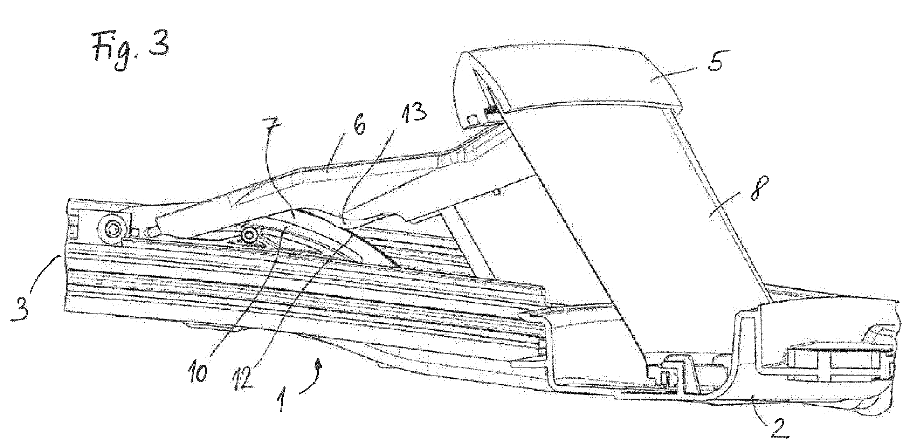

Eine Windschutzvorrichtung nach den Fig. 1 bis 3 ist für ein Fahrzeugdach eines Personenkraftwagens vorgesehen. Die Windschutzvorrichtung ist einem Dachausschnitt 1 zugeordnet, der durch einen nicht dargestellten Dachdeckel verschließbar ist. Der Dachdeckel ist Teil eines Schiebedachsystems, das ein Rahmenmodul 2 als Tragrahmen aufweist. Das Rahmenmodul 2 ist mit entsprechenden Randbereichen des Dachausschnitts 1 des Fahrzeugdachs in betriebsfertig montiertem Zustand fest verbunden.

Die Windschutzvorrichtung ist an einem in normaler Fahrtrichtung gesehen vorderen Stirnrandbereich des Dachausschnitts 1 angeordnet. Der Dachausschnitt 1 ist auf gegenüberliegenden Seiten mit jeweils einer Führungsanordnung 3 versehen, die als Führungsschienensystem ausgeführt ist. Die beiden Führungsanordnungen 3 auf gegenüberliegenden Seiten des Dachausschnitts 1 sind dazu vorgesehen, jeweils eine Führungsmechanik für den Dachdeckel zu führen, um den Dachdeckel zwischen einer Schließstellung und wenigstens einer Öffnungsstellung längs des Dachausschnitts 1 in Fahrzeuglängsrichtung zu verlagern. Zur Verlagerung der Führungsmechanik ist ein Antriebssystem vorgesehen, das für jede Seite ein Antriebsübertragungsmittel 4 in Form einer Flexwelle umfasst, die an einem entsprechenden Antriebsschlitten der jeweiligen Führungsmechanik angreift. Die Flexwelle stellt eine flexible Gewindewelle dar, die ein sich im Betrieb drehendes und längsverlagerndes Antriebskabel bildet.

Um bei geöffnetem Dachausschnitt 1 starke Windgeräusche oder unangenehme Zugerscheinungen im Fahrzeuginnenraum zu vermeiden, ist die Windschutzvorrichtung gemäß den Fig. 1 bis 3 vorgesehen. Die Windschutzvorrichtung weist einen Windabweiserbügel 5 auf, der sich in Dachquerrichtung über eine Breite des Dachausschnitts 1 erstreckt und an seinen gegenüberliegenden Seiten in jeweils einen Windabweiserarm 6 einstückig übergeht. In dem Windabweiserbügel 5 ist ein oberer Randbereich eines flexiblen Windschutzgebildes 8 gehalten, dessen unterer Randbereich an dem Rahmenmodul 2 befestigt ist. Der Windabweiserbügel 5 ist zwischen einer nicht dargestellten Ruhestellung und einer aufgestellten Funktionsposition (siehe Fig. 1 bis 3) in Längsrichtung und in Hochrichtung des Fahrzeugdachs verlagerbar. In der aufgestellten Funktionsposition ist das Windschutzgebilde 8 straff aufgespannt. In einer nach unten abgesenkten Ruhestellung des Windabweiserbügels 5 ist der Windabweiserbügel 5 unterhalb des in seiner Schließstellung befindlichen Dachdeckels positioniert.

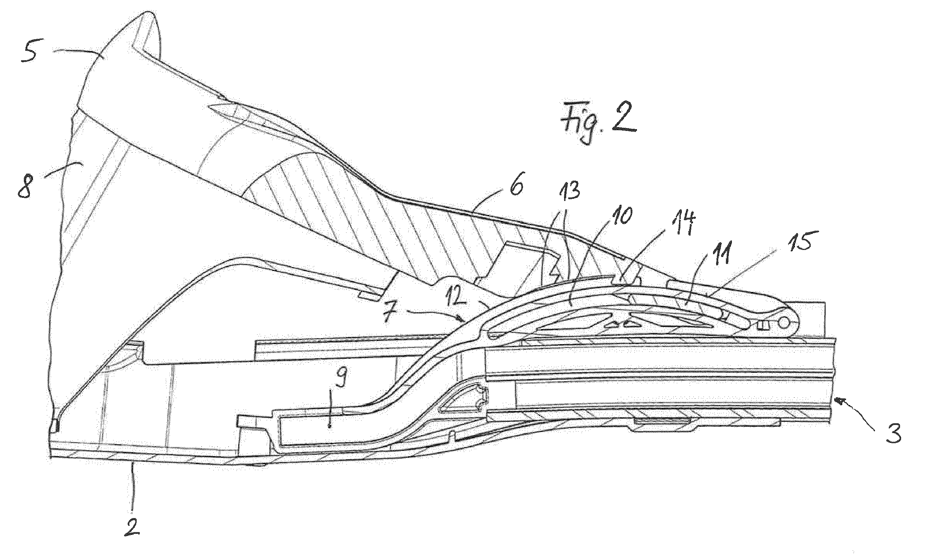

Jeder der beiden Windabweiserarme 6 ist in einer kreisbogenförmigen Kulissenführung 10 in Längsrichtung des Dachs verlagerbar. Aufgrund des Kreisbogens erfolgt zusätzlich zu der Verlagerung in Längsrichtung zwangsläufig eine Verschwenkung des Windabweiserbügels 5 nach oben, wie anhand der Fig. 2 gut erkennbar ist. Zur Stützung und Verlagerung des Windabweiserbügels 5 in den gegenüberliegenden Kulissenführungen 10 ist jeder Windabweiserarm 6 mit einem komplementär stegförmig kreisbogenartig gekrümmten Kulissenstein 11 versehen, der in die jeweilige Kulissenführung 10 hineinragt. Der Windabweiserarm 6 ist jeweils zur Dachmitte hin innenseitig an der Kulissenführung 10 vorbeigeführt, so dass der einstückig am Windabweiserarm 6 angeformte Kulissenstein 10 - auf eine Dachmitte bezogen - von innen nach außen in die Kulissenführung 10 hineinragt. Die Kulissenführung 10 ist in einem Funktionsbauteil 7 integriert, das oberhalb der Führungsanordnung 3 positioniert ist. Das Funktionsbauteil 7 bildet einen in Dachlängsrichtung erstreckten schmalen Stegbereich, der auf einer Oberseite der Führungsanordnung 3 aufliegt. Das Funktionsbauteil 7 ist in Fahrtrichtung nach vorne fortgeführt in einen Führungsfortsatz 9 der Führungsanordnung 3. Der Führungsfortsatz 9 bildet gemeinsam mit dem Funktionsbauteil 7 ein Kunststoffbauteil, das von vorne her an einen entsprechenden Führungsschienenabschnitt der Führungsanordnung 3 angesteckt und relativ zum Rahmenmodul 2 fixiert ist. Das Funktionsbauteil 7 weist oberhalb der Führungsanordnung 3 einen kreisbogenartigen Mittelsteg 15 auf, dessen Oberseite parallel zu der kreisbogenförmigen Kulissenführung 10 verläuft. In den Mittelsteg 15 ist die Kulissenführung 10 integriert. Das Funktionsbauteil 7 weist zudem zwei den Mittelsteg 15 außen- und innenseitig parallel flankierende Seitenstege 12 auf, deren Oberseite zumindest über einen Teil ihrer Länge parallel zu der Oberseite des Mittelstegs 15 erstreckt ist und demzufolge ebenfalls kreisbogenförmig gekrümmt ist.

Der Windabweiserarm 6 weist im Bereich seiner Unterseite kreisbogenförmig gekrümmte Stützflächen 13 auf, die sich auf der Oberseite wenigstens eines Seitenstegs 12 flächenbündig abstützen. Zudem ist am Windabweiserarm 6 ein Stütznocken 14 einstückig angeformt, der sich auf der Oberseite des Mittelstegs 15 abstützt. Die Oberseiten des wenigstens einen Seitenstegs 12 und des Mittelstegs 15 bilden Gleitflächen für die Stützflächen 13 des Windabweiserarms 6, so dass der Windabweiserarm 6 bei einer Verlagerung des Kulissensteins 11 innerhalb der Kulissenführung 10 über zusätzliche Flächen auf dem Funktionsbauteil 7 abgestützt ist. Der nicht dargestellte, gegenüberliegende Windabweiserarm 6 ist in identischer Weise gestaltet. Auch das gegenüberliegende Funktionsbauteil 7 ist in identischer Weise gestaltet. Unter der identischen Gestaltung ist jeweils auch eine spiegelsymmetrische Ausführung zu verstehen, da auch beim gegenüberliegenden Windabweiserarm der stegförmige Kulissenstein 11 von innen nach außen erstreckt ist. Durch die zusätzliche Abstützung der Windabweiserarme 6 auf dem jeweiligen Funktionsbauteil 7 ist eine erhöhte Stabilität des Windabweiserbügels 5 und eine verbesserte Führung des Windabweiserbügels 5 zwischen seiner Ruhestellung und seiner Funktionsposition gewährleistet.

Beiden Windabweiserarmen 6 ist in nicht dargestellter Weise jeweils eine Federeinheit zugeordnet, die auf den jeweiligen Windabweiserarm 6 eine permanente Kraft -und Drehmomentbelastung in Richtung der aufgestellten Funktionsposition ausübt. Die Schraubenfedern sind vorzugsweise in gleicher Weise angeordnet wie bei der DE 10 2013 203 979 A1. Sobald daher ein entsprechender Dachdeckel aus seiner Schließstellung in Richtung seiner Öffnungsstellung verfahren wird, stellt sich der Windabweiserbügel 5 durch entsprechende Kraft- und Momenteneinwirkung der Federeinheiten zwangsläufig in seine aufgestellte Funktionsposition auf. Bei einem erneuten Schließen des Dachdeckels übt der Dachdeckel auf den Windabweiserbügel 5 eine entsprechende Belastung entgegen der Federeinheiten aus, wodurch der Windabweiserbügel 5 zwangsläufig wieder nach vorne und nach unten in Richtung seiner Ruhestellung verlagert wird.

## Patentansprüche

1. Windschutzvorrichtung an einem verschließbaren Dachausschnitt (1) eines Kraftfahrzeugs mit einem Windabweiserbügel (5), an dem ein flexibles Windschutzgebilde (8) gehalten ist, und der wenigstens einen seitlichen Windabweiserarm (6) aufweist, der mittels einer Führungsmechanik in Hochrichtung und in Längsrichtung des öffnungsfähigen Dachabschnitts zwischen einer unteren Ruheposition und einer nach oben ausgestellten Funktionsposition verlagerbar ist, wobei die Führungsmechanik eine lineare Zwangsführung mit einer gekrümmten Führungsbahn aufweist, längs der der Windabweiserarm (6) in Längs- und Hochrichtung relativ zu dem Dachausschnitt (1) verlagerbar ist, **dadurch gekennzeichnet, dass** dem Windabweiserarm (6) wenigstens eine zusätzliche Stützfläche (13) zugeordnet ist, die sich auf einer zu der Führungsbahn parallel verlaufenden stationären Gleitfläche (12) abstützt.

2. Windschutzvorrichtung nach Anspruch 1, **dadurch gekennzeichnet, dass** die Führungsbahn als kreisbogenförmig gekrümmte Kulissenführung (10) gestaltet ist, und dass die Führungsmechanik einen kreisbogenförmig gekrümmten Kulissenstein (11) aufweist, der starr mit dem Windabweiserarm (6) verbunden und gleitbeweglich in der Kulissenführung (10) gelagert ist.

3. Windschutzvorrichtung nach Anspruch 2, **dadurch gekennzeichnet, dass** die Kulissenführung (10) in einem Funktionsbauteil (7) einer Führungsanordnung (3) für einen beweglichen Dachdeckel integriert ist, das in betriebsfertig montiertem Zustand stationär zu dem Dachausschnitt (1) angeordnet ist.

4. Windschutzvorrichtung nach Anspruch 3, **dadurch gekennzeichnet, dass** das Funktionsbauteil (7) stegförmig in Hochrichtung ausgerichtet ist, und dass das Funktionsbauteil (7) wenigstens eine obere Stirnrandfläche (12) aufweist, die die Gleitfläche für den Windabweiserarm (6) bildet.

5. Windschutzvorrichtung nach Anspruch 4, **dadurch gekennzeichnet, dass** die Stirnrandfläche (12) koplanar oder parallel versetzt zu einer Ebene ausgerichtet ist, in der die Kulissenführung (10) verläuft.

6. Windschutzvorrichtung nach einem der Ansprüche 3 bis 5, **dadurch gekennzeichnet, dass** das Funktionsbauteil (7) ein- oder mehrteilig ausgeführt ist.

7. Windschutzvorrichtung nach einem der Ansprüche 3 bis 6, **dadurch gekennzeichnet, dass** das Funktionsbauteil (7) einen Mittelsteg (15), in dem die Kulissenführung (10) vorgesehen ist, sowie wenigstens einen den Mittelsteg (15) flankierenden Seitensteg (12) aufweist, der mit der parallel zur Kulissenführung (10) verlaufenden Gleitfläche für den Windabweiserarm (6) versehen ist.
